# EUROPEAN PATENT SPECIFICATION

(11) **EP 3 019 921 B1**
(45) Date of publication and mention of the grant of the patent: **27.12.2023**
(21) Application number: 14732051.9
(22) Date of filing: 14.05.2014
(51) Int. Cl.: G05B 23/02

(54) **MONITORING INTERFACE WITH USER SELECTION OF DIAGNOSTIC DATA**
MONITORING-SCHNITTSTELLE MIT BENUTZERAUSWAHL VON DIAGNOSEDATEN
INTERFACE DE SURVEILLANCE AVEC SÉLECTION UTILISATEUR DE DONNÉES DIAGNOSTIQUES

(30) Priority: 11.07.2013 US 201313939883
(43) Date of publication of application: 18.05.2016
(73) Proprietor: Baker Hughes Holdings LLC, Houston, TX 77073 (US)
(72) Inventor: WILLIAMS, Scott, Terrell, Minden, NV 89423 (US); CEGLIA, Kenneth, Paul, Minden, NV 89423 (US)
(74) Representative: Novagraaf Group
(86) International application number: PCT/US2014/037942
(87) International publication number: WO 2015/005971

(56) References cited:
- EP-A1- 2 124 114
- EP-A1- 2 169 497
- WO-A1-2009/112055
- US-A1- 2005 062 599
- ABB AUTOMATION TECHNOLOGY PRODUCTS: "Aspect Object technology from ABB Solution to the corporate information management problem", INTERNET CITATION, 1 January 2001 (2001-01-01), pages 1-16, XP002657512, Retrieved from the Internet: URL:http://www02.abb.com/GLOBAL/SEITP/seit p161.nsf/viewunid/342D723E4A4D44C4C1256B58 0070EF69/$file/Aspects+Objects.pdf [retrieved on 2011-08-23]

## Description

### BACKGROUND

The subject matter disclosed herein generally relates to process control systems and, more specifically, to monitoring the operation of machinery.

Control systems are often used in conjunction with process systems, such as manufacturing or production processes, to regulate and/or monitor various operating parameters of the process. For instance, a control system may regulate the values of certain input parameters of the process in order to drive one or more target output parameters (e.g., flow rate, power output, etc.) to a desired value. Some control systems may also provide process data to an operator in the form of visual feedback, such as by outputting certain selected data points to a human-machine interface (HMI), which may include a graphical user interface displayed using a display device. This may enable the operator to monitor and assess the process performance parameters in substantially real time and, if necessary, take corrective actions if certain parameters are deviating from an expected range or norm.
Such control systems may use process controllers for controlling system operations, and the process controllers may include a combination of hardware and software components. As may be appreciated, these control systems may become overly complex as additional elements and measurements are implemented to be controlled. Similarly, the monitoring systems utilized to monitor the control systems may also increase in complexity. That is, these monitoring systems may provide large amounts of data that can be difficult for a user to interpret. Accordingly, it would be beneficial to streamline the monitoring system to allow for robust monitoring while simplifying the user experience.
EP 2124114 A1 discloses a method for selecting objects displayed on an operator system.
US 2005/062599 A1 discloses a tool for sensor management and fault visualization in machine condition monitoring.
EP 2 169 497 A1 discloses a dynamic vibration condition monitoring parameter normalization system.

### BRIEF DESCRIPTION OF THE INVENTION

The present invention is defined in the accompanying claims.

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.
In a first embodiment a method for monitoring diagnostic data as defined in claim 1 is provided.

In a further embodiment, a device is provided as defined in claim 9.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram view of an embodiment including an industrial control system, in accordance with an embodiment;
FIG. 2 is a block diagram of human machine interface of FIG. 1, in accordance with an embodiment;
FIG. 3 is a first screenshot of a GUI used in conjunction with the human machine interface of FIG. 1, in accordance with an embodiment;
FIG. 4 is a second screenshot of a GUI used in conjunction with the human machine interface of FIG. 1, in accordance with an embodiment;
FIG. 5 is a third screenshot of a GUI used in conjunction with the human machine interface of FIG. 1, in accordance with an embodiment;
FIG. 6 is a fourth screenshot of a GUI used in conjunction with the human machine interface of FIG. 1, in accordance with an embodiment;
FIG. 7 is a fifth screenshot of a GUI used in conjunction with the human machine interface of FIG. 1, in accordance with an embodiment; and
FIG. 8 is a sixth screenshot of a GUI used in conjunction with the human machine interface of FIG. 1, in accordance with an embodiment.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Further, the term "client" may refer to a computer (e.g., a processor and storage that allows execution and storage of machine-readable instructions to provide the functionality described herein) and/or computer processes running on such computers.

Present embodiments relate to systems and methods for monitoring components or machinery in one or more industrial systems. For example, a monitoring system may be present that generates data for use by a user in monitoring, for example, industrial machinery. In some embodiments, this data may be historical data, for example, stored in a server. In other embodiments, this data may be real time observed data received from one or more field locations that include the machinery. The monitoring system may filter this data, for example, based on user configuration decisions that allow for desired data to be present on a display. These user configurations may allow for a user to set up or configure the monitoring system to display desired data as part of a common GUI with the display of the data. This configuration may also include selection of preset choices available to the user to aid in deciding which data to make available for viewing. By including the configuration ability in a common GUI with the monitoring (e.g. diagnostic) GUI, the overall flexibility and ease with which a user may utilize the monitoring system may be increased.

Additionally, as part of the GUI of the monitoring system, a view selection tab may be included. This view selection tab may allow for automatic (e.g., monitoring system based) switching between data sets to be presented to a user. In this manner, a single interface may be utilized to provide accessibility to a large set of distinct and separate data pools (each, for example, corresponding to particular machinery). Moreover, setup of this monitoring system may be part of the common GUI to allow for streamlined set up of the monitoring system to provide desired data for monitoring. In this manner, distinct machinery may be monitored in a single GUI as part of the monitoring system. Additional capabilities may also be added to the monitoring system via plug-in software programs that, for example, may be machine specific and included as desired by a user. This allows for greater flexibility of the monitoring system.

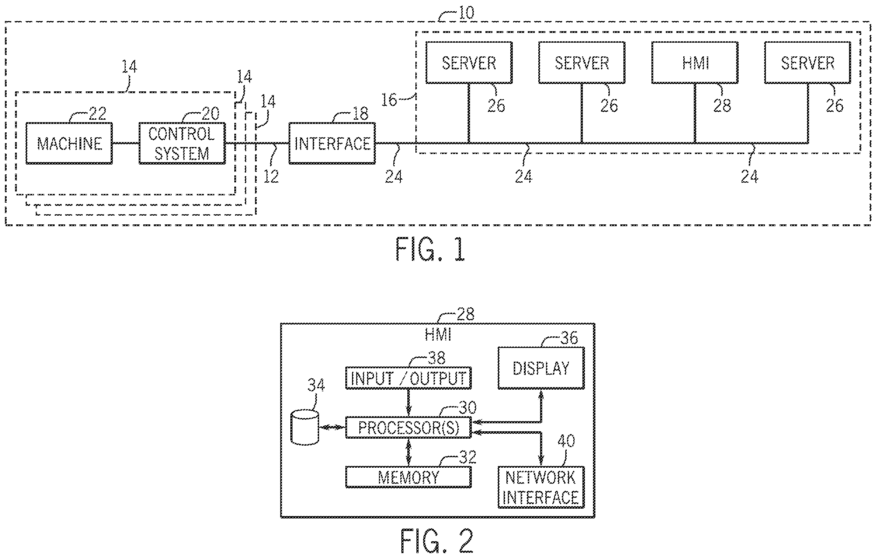

With the foregoing in mind, FIG. 1 illustrates a block diagram view of an industrial control system ("ICS") 10. The ICS may include, for example, a network path 12 that couples one or more field locations 14, to a control system network 16, via, for example, a communication interface 18. The field locations 14 may include a control system 20 as well as machinery 22 to be monitored. In some embodiments, the control system 20 may monitor one or more operating parameters of the machinery 22. In certain embodiments, the machinery 22 may be representative of one or more of the following: wind turbines, steam turbines, hydraulic turbines, gas turbines, aeroderivative turbines, compressors, gears, turbo-expanders, pumps, motors, generators, fans, blowers, agitators, mixers, centrifuges, pulp refiners, ball mills, crushers/pulverizers, extruders, pelletizers, cooling towers/heat exchanger fans, and/or other systems suitable to be monitored.

During operation of the machinery 22, one or more sensors may measure one or more operating parameters of the machinery 22 and transmit the measured values as signals to the control system. The sensors may be transducers or other suitable measurement devices, which can be used to measure various parameters of the machinery 22 or components therein, for example, the rotational speed of a shaft of a turbine, the operating temperature of a turbine, or other similar operating parameters. The sensors may transmit the signals related to the operating parameter of machinery 22 to be monitored to control system 20.

Accordingly, in one embodiment, the control system 20 may receive one or more signals indicative of measured operating parameters of the machinery 22 and may record and/or analyze the signal indicative of measured operating parameters of the machinery 22, for example, to generate control signals used to adjust input values for the machinery 22 (e.g., to control the operation of the machinery 22).

In some embodiments, the control system 20 may transmit information related to the operation of the machinery 22 to interface 18 along signal path 12, which may be a physical connection or a wireless connection. Interface 18 may be a router or other network device that transmits communication signals. Additionally or alternatively, interface 18 may be a communication interface that alters signals transmitted between the field locations 14 and control system network 16 (e.g., converts signals from one communication protocol to another). Interface 18 may transmit signals received between field locations 14 and control system network 16 along signal path 24, which may also be a physical connection or a wireless connection. For example, each of signal paths 12 and 24 may be a wired connection, such as an Ethernet connection and/or the like. Alternatively, each of signal paths 12 and 24 may be a wireless signal path, such as a local area network (LAN) (e.g., Wi-Fi), a wide area network (WAN) (e.g., 3G or 4G), a Bluetooth network, and/or part of another wireless network. Additionally, in some embodiments, signal path 12 may be a physical connection, while signal path 24 may be a wireless connection or vice versa.

As illustrated in FIG. 1, signal path 24 may be coupled to one or more servers 26 as well as a human machine interface 28 in the control system network 16. The servers 26 may include, for example, data acquisition servers that allow for the storage and/or retrieval of field location 14 data, database servers that provide database services to other computer programs or computers, and or other various servers. Additionally, as previously set forth, the control system network 16 may include one or more human machine interfaces 28, which may, for example, include a workstation and/or computer. This workstation or computer may be utilized, for example, to display information to a user related to one or more field locations 14 to allow for monitoring and/or control of the elements present in one or more of the field locations 14. That is, human machine interface 28 may implement a monitoring system that allows for monitoring of the conditions of the machinery 22 in one or more of field locations 14.

Additionally, it may be appreciated that one or more human machine interfaces 28 may be present at each of the field locations 14 in addition to or in place of the human machine interface 28 of the control system network 16. Thus, while the human machine interface 28 of the control system network 16 may allow for monitoring of multiple field locations 14, local human machine interfaces 28 may also be present instead of or in addition to the human machine interface 28 of the control system network 16, whereby the human machine interface 28 of each field location 14 may monitor machinery 22 present in the respective field location 14 in which the local human machine interface 28 is present. An example of these human machine interfaces 28 is illustrated in FIG. 2

As illustrated in FIG. 2, the human machine interface 28 includes processor 30 and/or other data processing circuitry may be operably coupled to memory 32 and storage 34 to execute instructions for carrying out the presently disclosed techniques. These instructions may be encoded in programs that may be executed by the processor 30 and/or other data processing circuitry (e.g., general central processing units (CPUs), embedded CPUs, systems on a chip (SOC), application specific processors, application specific integrated circuits (ASICs), field programmable gate arrays (FPGAs), and their combinations) which may be operably coupled to memory 32 and to execute instructions for carrying out the presently disclosed techniques. These instructions may be encoded in programs that may be executed by the processor 30. Additionally, the instructions may be stored in any suitable article of manufacturer that includes at least one tangible, computer-readable medium that at least collectively stores these instructions or routines, such as the memory 32 or the storage 34. The memory 32 and the storage 34 may include, for example, random-access memory, read-only memory, rewritable memory, flash memory, and/or other physical storage devices, such as a hard drive and/or optical discs.

The human machine interface 28 also may include a display 36 that may display a graphical user interface (GUI) of the human machine interface 28. As should be appreciated, the human machine interface 28 may include a variety of other components, such as a power supply, a keyboard, a mouse, a track pad, and/or a touch screen interface, and so forth. By way of example, the human machine interface 28 may also include input/output (I/O) ports 38 that allow for physical components to be externally coupled to the human machine interface 28, as well as a network interface 40. The network interface 40 may provide communication via a personal area network (PAN) (e.g., Bluetooth), a local area network (LAN) (e.g., Wi-Fi), a wide area network (WAN) (e.g., 3G or LTE), Ethernet, and/or the like. Through the network interface 40, the human machine interface 28 may communicate over signal path 24 for example, to enable processing and/or communication with other networked devices, such as the servers 26 and/or control system 20.

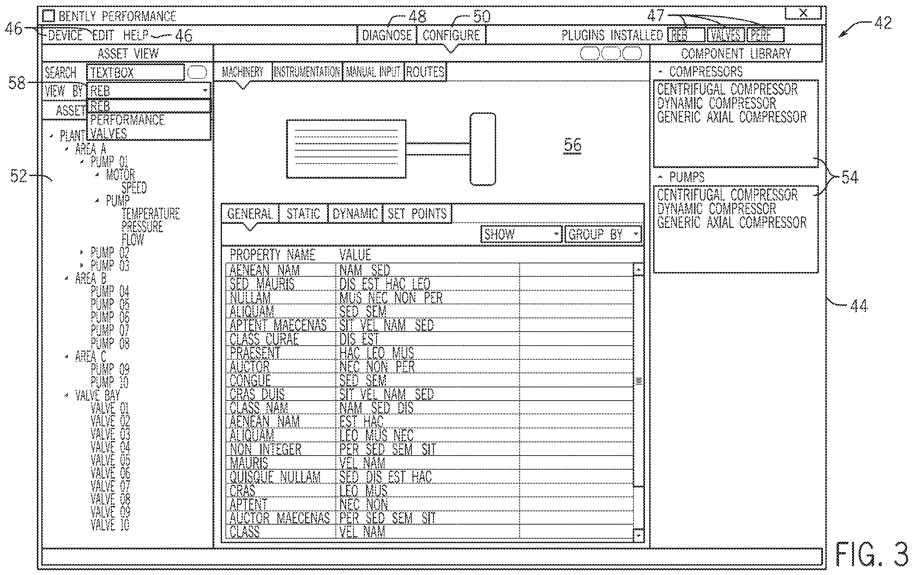

As previously noted, the human machine interfaces 28, regardless of their physical location in field location 14 or control system network 16, may implement a monitoring system that may include code (e.g., monitoring software) stored on a tangible machine readable medium (e.g., memory 32 and/or storage 34) that may enable a user to quickly identify important events, evaluate situations, and respond to the events and situations present in control system 20 and/or machinery 22. This may lead to increased equipment availability, reliability, and reduced maintenance costs. In some embodiments, the monitoring system may include real-time alteration of operational characteristics of the machinery and/or selected processes to increase performance, decrease waste, or for other reasons. The monitoring system may also perform condition monitoring and event diagnostics. Moreover, the monitoring system may allow for a graphical user interface (GUI) that allows for user interaction. In some embodiments, the monitoring system may be a System 1^{®} condition monitoring software and diagnostics software platform made available by General Electric^{®} of Schenectady, New York, or a similar system. FIG. 3 illustrates one screenshot of the GUI of the monitoring system of the human machine interface 28, as rendered on display 36.

As discussed above, FIG. 3 illustrates a GUI 42 that may be present on display 36. This GUI 42 may include screenshot 44 of items viewable by a user. Additionally, the user may interact with the GUI 42 by touching a touch screen display 36 that allows for user input to be received directly on the display screen 36. In another embodiment, a user may interact with the GUI 42 via input structures, such as buttons, sliders, switches, control pads, keys, knobs, scroll wheels, keypads, a mouse, touchpads, and so forth. These may facilitate the interaction of a user with the GUI 42.

The GUI 42 may include text and/or one or more graphical icons to allow a user to interface with the monitoring system. For example, the GUI 42 may include tabs 46 that allow a user to navigate the GUI 42. Additionally, the GUI 42 may show the type of monitoring that may occur as represented by plug-in tabs 47. These plug-in tabs 47 may represent the choices that a user has available to set up the monitoring system and, in some embodiments, may be implemented separately from the monitoring system based on, for example, the machinery 22 present to be monitored. That is, the plug-in tabs 47 may represent instructions added to the monitoring system, for example, at a date subsequent to in implementation of the monitoring system (e.g., the plug-in tabs may represent software add-ons available to a user).

The GUI 42 may also include environment selection tabs 48 and 50 that may correspond to different views that a user may select. GUI 42 may also include location information 52 that provides information to a user as to which location 14 and/or which machinery 22 is being viewed at a given time. GUI 42 may further include library information 54 that provides a user with information as to which machinery 22, and what components therein, have been integrated into the monitoring system. Also illustrated as part of the GUI 42 is a machinery screen 56 that provides information as to selected machinery 22 to a user, as well as a view selection tab 58, which provides a selectable list of views available to a user.

As illustrated in FIG. 3, the GUI 42 is split into two main environments, a configuration and a diagnostic environment, selectable by environment selection tabs 48 and 50, respectively. However, it should be noted that less or more additional environments may be utilized in conjunction with the present GUI 42. FIG. 3 illustrates a screenshot 44 view that corresponds to the configure environment selection tab 50 being selected (e.g., to allow a user to configure various monitoring outputs of the GUI 42). Additionally, while in the configuration environment, a user may select one of a plurality of tabs from the view selection tab 58. In the present embodiment, a user may select "REB", which may correspond to a rolling element bearing (e.g., a particular element of machinery 22 to be monitored). Through interaction with the machinery screen 56, a user may set up (e.g., configure) various specific monitoring selections. This may allow for a customizable monitoring experience for a user, e.g., tailored to the demands of a particular user/ICS 10. In some embodiments, the monitoring system may itself tailor the user experience (i.e., what a user may see on display 36) based on what the user has selected in the configuration environment. For example, the monitoring system may present a set of configuration options and screens specifically for configuring REB tools from a preset stored set of options. This may allow for setting up the monitoring system without the user having to specifically program the GUI 42 or the monitoring system (i.e., it allows the monitoring system to be set up based on predetermined available options to increase the robustness of the monitoring system, while still allowing for the system to be user friendly).

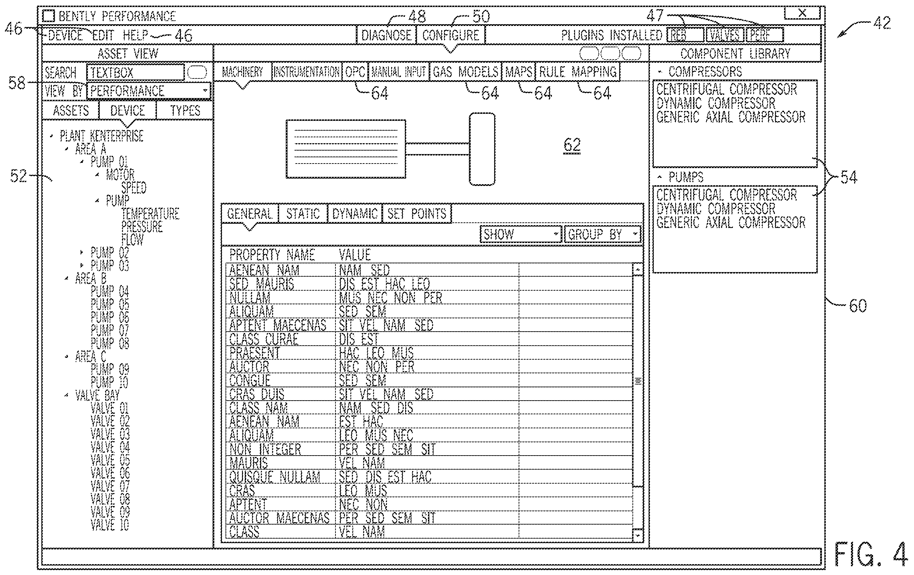

Accordingly, by utilizing a machinery screen 56 that includes particular preset options for configuration of monitoring of an element (e.g., the REB) through use of, for example, the view selection tab 58, the monitoring system may be user configurable while still retaining its ease of use. FIG. 4 details an additional implementation of the GUI 42 of FIG. 3.

FIG. 4 illustrates a second screenshot 60 of GUI 42 that may be present on display 36. Similar to FIG. 3 discussed above, screenshot 60 may include tabs 46, plug-in tabs 47, environment selection tabs 48 and 50, location information 52, library information 54, and a view selection tab 58. Additionally, the GUI 42 may include a machinery screen 62 that provides information as to selected machinery 22 to a user. As illustrated in screenshot 60, a configuration environment is selected by a user, corresponding to configure environment selection tab 50 being selected (e.g., to allow a user to configure various monitoring outputs of the GUI 42). Additionally, while in the configuration environment, a user may select one of a plurality of tabs (e.g., "performance"), from the view selection tab 58, which may correspond to the showing of a machinery screen 62 that includes, in this example, performance tabs 64 not present in screenshot 44. These performance tabs 64 may allow for a user to select specific performance monitoring screens and technologies to tailor the monitor system as desired. In addition, in some embodiments, library information 54 choices on the GUI 42 may be filtered as well, for example, in conjunction with specific performance only configuration choices made by a user.

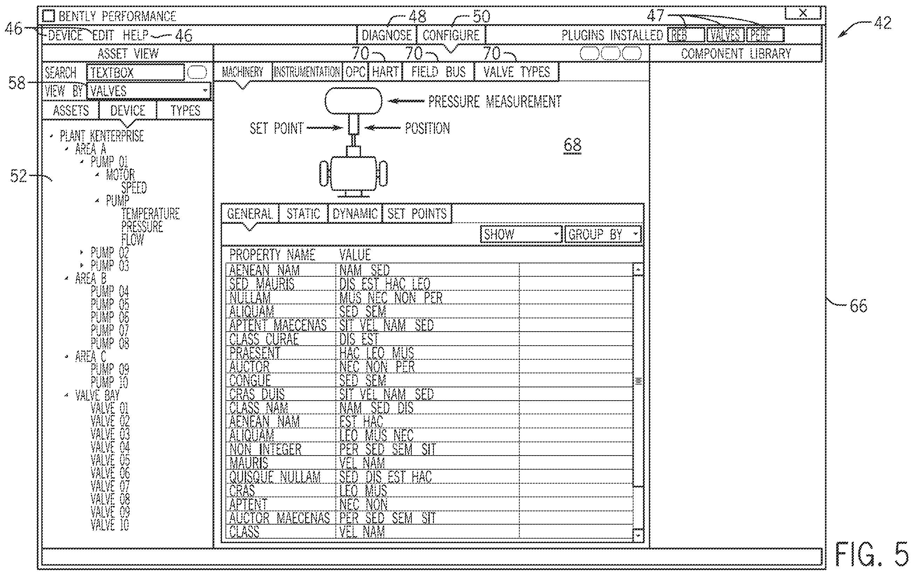

FIG. 5 illustrates a third screenshot 66 of GUI 42 that may be present on display 36. Similar to FIGS. 3 and 4 discussed above, screenshot 66 may include tabs 46, plug-in tabs 47, environment selection tabs 48 and 50, location information 52, and a view selection tab 58. Additionally, the GUI 42 may include a machinery screen 68 that provides information as to selected machinery 22 to a user. As illustrated in screenshot 66, a configuration environment is selected by a user, corresponding to configure environment selection tab 50 being selected (e.g., to allow a user to configure various monitoring outputs of the GUI 42). Additionally, while in the configuration environment, a user may select one of a plurality of tabs (e.g., "valves"), from the view selection tab 58, which may correspond to the showing of a machinery screen 68 that includes, in this example, valve tabs 70 not present in screenshots 44 and 60. These valve tabs 70 may allow for a user to select specific performance monitoring of valves of the machinery 22 to tailor the monitor system as desired. It should be noted that while valve tabs 70 are illustrated, in other embodiments, other systems or subsystems of machinery 22 may instead be selected and their corresponding machinery screens would be shown to a user to allow for tailoring of monitoring options for the selected machinery 22.

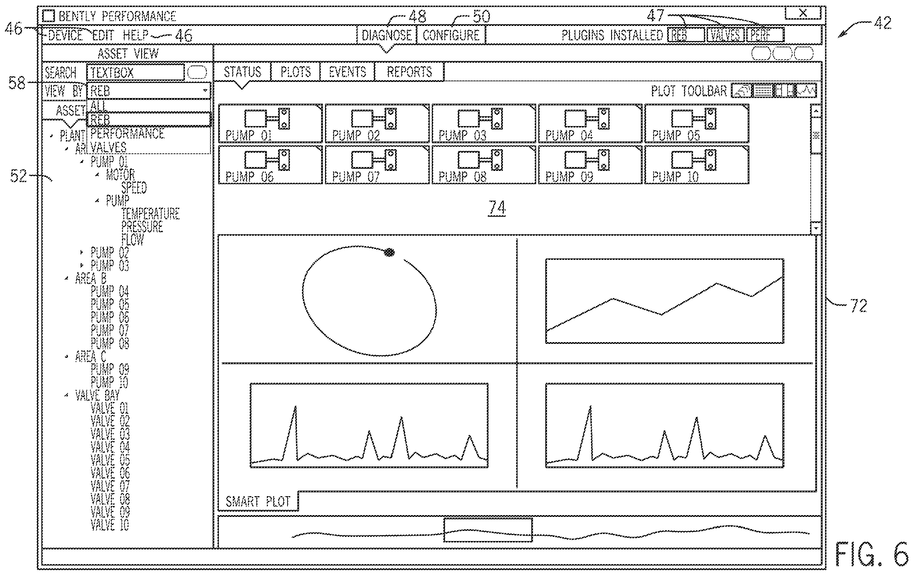

Thus, each of FIGS. 3-5 illustrate the ability of the monitoring system to allow a user to specify what type of monitoring may occur, through the use of a GUI 42. The GUI 42 also is able to show actual monitoring of the machinery 22, as will be discussed below in conjunction with FIGS. 6-8.

FIG. 6 illustrates a fourth screenshot 72 of GUI 42 that may be present on display 36. Similar to FIGS. 3, 4, and 5 discussed above, screenshot 72 may include tabs 46, plug-in tabs 47, environment selection tabs 48 and 50, location information 52, and a view selection tab 58. Additionally, the GUI 42 may include a diagnostic screen 74 that provides information as to selected machinery 22 to a user. As illustrated in screenshot 72, a diagnostic environment is selected by a user, corresponding to diagnostic environment selection tab 48 being selected (e.g., to allow a user to diagnose and/or monitor various outputs of the machinery 22).

While in the diagnostic environment, a user may select one of a plurality of tabs (e.g., "REB"), which may correspond to a rolling element bearing (e.g., a particular element of machinery 22 to be monitored), from the view selection tab 58. This may correspond to diagnostic screen 74 being shown as part of the GUI 42. For example, when the user selects a particular asset (e.g., REB) to view data for that asset, the machinery may display plots that are specific to diagnostics of that asset (e.g., rolling element bearing diagnostics).

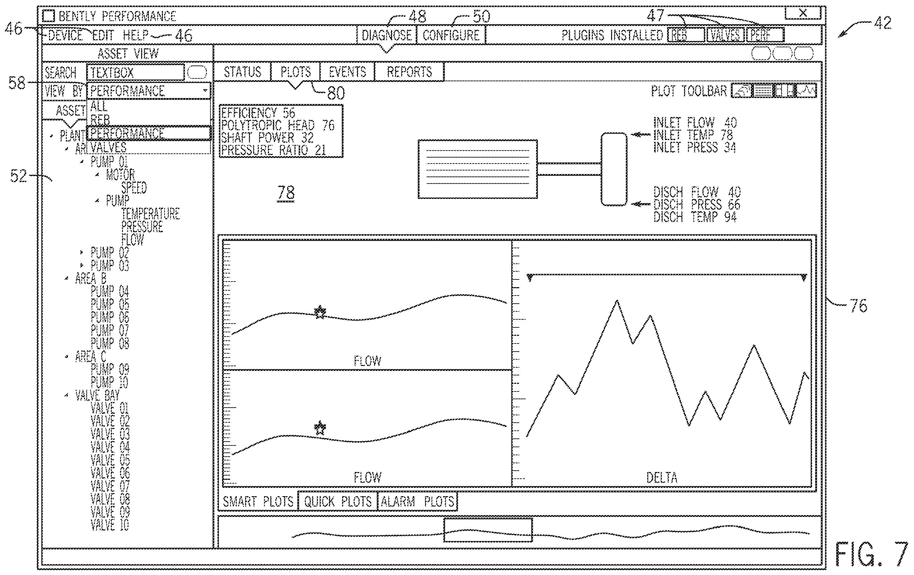

Likewise, in FIG. 7, a fifth screenshot 76 of GUI 42 is illustrated. Screenshot 76 may include tabs 46, plug-in tabs 47, environment selection tabs 48 and 50, location information 52, and a view selection tab 58. Additionally, the GUI 42 may include a diagnostic screen 78 that provides information as to selected machinery 22 to a user. As illustrated in screenshot 76, a diagnostic environment is selected by a user, corresponding to diagnostic environment selection tab 48 being selected (e.g., to allow a user to diagnose and/or monitor various outputs of the machinery 22).

While in the diagnostic environment, a user may select one of a plurality of tabs (e.g., "performance"), which may correspond to a user requesting a view that will provide performance characteristics of an asset (e.g., the REB). Additionally, by selection of view tab 80, a user may view plots and diagnostic options that are specific to looking at the performance of a selected asset. That is, the monitoring system may retrieve information related to the selections made by the user and received via the GUI 42 to provide the desired information to a user.

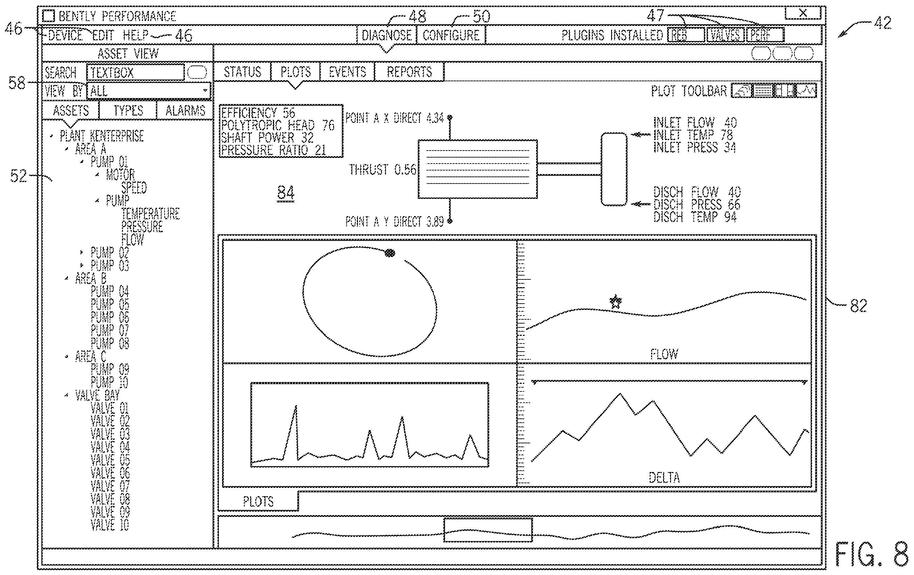

Similarly, in FIG. 8, a sixth screenshot 82 of GUI 42 is illustrated. Screenshot 82 may include tabs 46, plug-in tabs 47, environment selection tabs 48 and 50, location information 52, and a view selection tab 58. Additionally, the GUI 42 may include a diagnostic screen 84 that provides information as to selected machinery 22 to a user. As illustrated in screenshot 82, a diagnostic environment is selected by a user, corresponding to diagnostic environment selection tab 48 being selected (e.g., to allow a user to diagnose and/or monitor various outputs of the machinery 22).

While in the diagnostic environment, a user may select one of a plurality of tabs (e.g., "all"), which may correspond to a user requesting a view that will provide multiple performance characteristics of an asset simultaneously. This is represented in diagnostic screen 84. In this manner, the monitoring system may correlate data from a plurality of technologies at the same time for common representation on a single diagnostic screen 84.

With the monitoring system having a plurality of monitoring capabilities (e.g., a thermal performance plug-in, a vibration plug-in, and a lubrication plug-in) related to a given asset, if the particular asset (e.g., a particular machine or element of machinery 22) was experiencing a fault (e.g., a worn bearing) the monitoring system simultaneously renders vibration levels, the lubrication metal content, and the thermal performance degradation values as part of GUI 42 to allow for a more accurate diagnosis. That is, if the user were only able to view these values separately, a probability of accurately diagnosing a problem/fault (e.g., a worn bearing fault) is reduced.

Moreover, while the monitoring system allows for this group evaluation, in other embodiments, separate evaluations of the data requested by a user may instead be rendered. For example, in some cases, it may be advantageous to look at each type of technology separately and individually to gain a clear understanding of the data. The monitoring system may allow for such individual representations to be shown (e.g., through manipulation of view selection tab 58). Thus, for example, a thermal performance engineer might look at the performance data. Similarly, a vibration expert might separately view the bearing vibration data. This process might be repeated as often as desired when separate viewing of the data rendered via the GUI 42 is advantageous.

Additionally, it should be noted that the view selection tab 58 may not only include monitoring technologies. In some embodiments, the view selection tab 58 may correspond, for example, to modes of machine operation, such as "startup", "shutdown," or "steady state". This additional flexibility offered by the monitoring system may allow for different plot and data formats for different machine modes to be presented to a user. Additionally, in some embodiments, the view selection tab 58 when encompassing the mode of the machine operation may operate in manner similar to that described above with respect to FIGS. 3-8 (e.g., a user may place the monitoring system in a specific mode tailored to the state of a given machine).

In this manner, the monitoring system may generate data for use by a user in monitoring, for example, machinery 22. In some embodiments, this data may be historical data, for example, stored in server 26, or may be real time data received from field locations 14. The monitoring system may filter this data, for example, based on user configuration decisions that allow for desired data to be present on a display 36. Moreover, by including a view selection tab 58 as part of the GUI 42 of the monitoring system, the monitoring system may automatically switch between data sets to be presented to a user. This allows for a single interface to provide accessibility to a large set of distinct and separate data pools (each, for example, corresponding to particular machinery 22). Moreover, the setup of this system may be part of the same GUI 42 and may allow for a user friendly system to set up the monitoring system to provide desired data for monitoring. Thus, distinct machinery may be monitored in a single GUI 42 as part of the monitoring system. Additional capabilities may also be added to the monitoring system via plug-in software programs that, for example, may be machine specific and included as desired by a user. This allows for greater flexibility of the monitoring system. In some embodiments, the monitoring system and/or the plug-ins may be code stored on a tangible machine readable medium, such as an optical disc, flash memory, a server (e.g., and downloaded via an internet or a local connection), or another physical storage device.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method for monitoring diagnostic data, the method comprising:
determining, based on a received indication of a first user input, a manner in which diagnostic data related to a machine (22) is to be displayed on a display (36) allowing for switching between data sets to be presented to a user;
determining, based on a received indication of a second user input, which portion of the diagnostic data is to be displayed on the display (36);
transmitting a display control signal to a diagnostic screen (84), wherein the signal is related to the manner in which the diagnostic data is to be displayed on the display (36) and which portion of the diagnostic data is to be displayed on the display (36) and presenting a set of configuration options and screens specifically for configuring elements of machinery (22) from a preset stored set of options;
**characterized by**, if the machine (22) is experiencing a fault, simultaneously rendering vibration levels, lubrication metal content and thermal performance degradation values as part of a graphical user interface (42) including the diagnostic screen (84) for the machine (22).

2. The method of claim 1, comprising generating the graphical user interface (42) for display on the display (36) when both the first user input and the second user input are received.

3. The method of claim 1 or 2, comprising identifying the indication of the second user input as corresponding to one value from a pre-set plurality of values related to the machine (22).

4. The method of claim 3, comprising receiving an indication of a second pre-set plurality of values related to the machine (22).

5. The method of any of claims 1 to 4, comprising selecting the portion of the diagnostic data based in part on the indication of the first user input.

6. The method of any of claims 1 to 5, comprising to generating the signal as inclusive of measurements of disparate operational characteristics of the machine (22).

7. A computer program comprising computer program code means adapted to perform the method of any of claims 1 to 6 when executed by a computer processor.

8. The computer program of claim 7, embodied on a computer readable medium.

9. A device (28) comprising a computer processor (30) configured to execute instructions to
receive diagnostic data related to the operation of a machine (22);
receive a first user input related to a manner in which the diagnostic data is to be displayed on a display (36), allowing for switching between data sets to be presented to a user;
receive a second user input related to which portion of the diagnostic data is to be displayed on the display (36);
transmit a signal related to the manner in which the diagnostic data is to be displayed on the display (36) and which portion of the diagnostic data is to be displayed on the display (36), and presenting a set of configuration options and screens specifically for configuring elements of machinery (22) from a preset stored set of options;
**characterized by**, if the machine (22) is experiencing a fault, simultaneously rendering vibration levels, lubrication metal content and thermal performance degradation values as part of a graphical user interface (42) including the diagnostic screen (84) for the machine (22).

10. The device of claim 9, wherein the device is configured to receive the first user input and second user input as responses to a common graphical user interface displayed on the display when both the first user input and the second user input are received by the graphic user interface.

11. The device of claim 9 or 10, wherein the device is configured to receive the diagnostic data in real time or to receive the diagnostic data from storage as historical data.

12. The device of claim 9 or 10, wherein receiving the second user input comprises identifying the second user input as corresponding to one value from a pre-set plurality of values related to the machine.

13. The device of claim 12, wherein the device (28) is configured to receive a second pre-set plurality of values related to the machine (22).

14. The device of claim 13, wherein the device (28) is configured to receive the second pre-set plurality of values related to the machine (22) from via an internet connection.

15. The device of any of claims 9 to 14, wherein receiving the second user input comprises selecting the portion of the diagnostic data based in part on the first user input.

## Patentansprüche

1. Verfahren zum Überwachen von Diagnosedaten, das Verfahren umfassend:
Bestimmen, basierend auf einer empfangenen Angabe einer ersten Benutzereingabe, einer Weise, in der Diagnosedaten, die sich auf eine Maschine (22) beziehen, auf einer Anzeige (36) angezeigt werden sollen, die ein Umschalten zwischen Datensätzen ermöglicht, die einem Benutzer dargestellt werden sollen;
Bestimmen, basierend auf einer empfangenen Angabe einer zweiten Benutzereingabe, welcher Abschnitt der Diagnosedaten auf der Anzeige (36) angezeigt werden soll;
Übertragen eines Anzeigesteuersignals an einen Diagnosebildschirm (84), wobei sich das Signal auf die Weise bezieht, in der die Diagnosedaten auf der Anzeige (36) angezeigt werden sollen, und wobei der Abschnitt der Diagnosedaten auf der Anzeige (36) angezeigt werden soll und einen Satz von Konfigurationsoptionen und Bildschirmen, speziell zum Konfigurieren von Elementen von Maschinen (22) aus einem voreingestellten gespeicherten Satz von Optionen darstellt;
**gekennzeichnet durch** falls die Maschine (22) einen Fehler erfährt, gleichzeitiges Wiedergeben von Vibrationsniveaus, Schmiermetallgehalt und Wärmeleistungsverschlechterungswerten als Teil einer grafischen Benutzerschnittstelle (42), einschließlich des Diagnosebildschirms (84) für die Maschine (22).

2. Verfahren nach Anspruch 1, umfassend das Erzeugen der grafischen Benutzeroberfläche (42) zum Anzeigen auf der Anzeige (36), wenn sowohl die erste Benutzereingabe als auch die zweite Benutzereingabe empfangen werden.

3. Verfahren nach Anspruch 1 oder 2, umfassend das Identifizieren der Angabe der zweiten Benutzereingabe als einem Wert aus einer voreingestellten Vielzahl von Werten entsprechend, die sich auf die Maschine (22) beziehen.

4. Verfahren nach Anspruch 3, umfassend das Empfangen einer Angabe einer zweiten voreingestellten Vielzahl von Werten, die sich auf die Maschine (22) beziehen.

5. Verfahren nach einem der Ansprüche 1 bis 4, umfassend das Auswählen des Abschnitts der Diagnosedaten, teilweise basierend auf der Angabe der ersten Benutzereingabe.

6. Verfahren nach einem der Ansprüche 1 bis 5, umfassend das Erzeugen des Signals als einschließlich Messungen verschiedener Betriebseigenschaften der Maschine (22).

7. Computerprogramm, umfassend Computerprogrammcodemittel, die angepasst sind, um das Verfahren nach einem der Ansprüche 1 bis 6 durchzuführen, wenn sie durch einen Computerprozessor ausgeführt werden.

8. Computerprogramm nach Anspruch 7, das auf einem computerlesbaren Medium verkörpert ist.

9. Vorrichtung (28), umfassend einen Computerprozessor (30), der konfiguriert ist, um Anweisungen auszuführen zum:
Empfangen von Diagnosedaten, die sich auf den Betrieb einer Maschine (22) beziehen;
Empfangen einer ersten Benutzereingabe, die sich auf eine Weise bezieht, in der Diagnosedaten, auf einer Anzeige (36) angezeigt werden sollen, die ein Umschalten zwischen Datensätzen ermöglicht, die einem Benutzer dargestellt werden sollen;
Empfangen einer zweiten Benutzereingabe, die sich darauf bezieht, welcher Abschnitt der Diagnosedaten auf der Anzeige (36) angezeigt werden soll;
Übertragen eines Signals, das sich auf die Weise bezieht, in der die Diagnosedaten auf der Anzeige (36) angezeigt werden sollen, und wobei der Abschnitt der Diagnosedaten auf der Anzeige (36) angezeigt werden soll und einen Satz von Konfigurationsoptionen und Bildschirmen, speziell zum Konfigurieren von Elementen von Maschinen (22) aus einem voreingestellten gespeicherten Satz von Optionen darstellt;
**gekennzeichnet durch** falls die Maschine (22) einen Fehler erfährt, gleichzeitiges Wiedergeben von Vibrationsniveaus, Schmiermetallgehalt und Wärmeleistungsverschlechterungswerten als Teil einer grafischen Benutzerschnittstelle (42), einschließlich des Diagnosebildschirms (84) für die Maschine (22).

10. Vorrichtung nach Anspruch 9, wobei die Vorrichtung konfiguriert ist, um die erste Benutzereingabe und die zweite Benutzereingabe als Antworten auf eine gemeinsame grafische Benutzeroberfläche zu empfangen, die auf der Anzeige angezeigt wird, wenn sowohl die erste Benutzereingabe als auch die zweite Benutzereingabe durch die grafische Benutzeroberfläche empfangen werden.

11. Vorrichtung nach Anspruch 9 oder 10, wobei die Vorrichtung konfiguriert ist, um die Diagnosedaten in Echtzeit zu empfangen oder die Diagnosedaten aus der Speicherung als historische Daten zu empfangen.

12. Vorrichtung nach Anspruch 9 oder 10, wobei das Empfangen der zweiten Benutzereingabe das Identifizieren der zweiten Benutzereingabe als einem Wert aus einer voreingestellten Vielzahl von Werten entsprechend, die sich auf die Maschine beziehen.

13. Vorrichtung nach Anspruch 12, wobei die Vorrichtung (28) konfiguriert ist, um eine zweite voreingestellte Vielzahl von Werten zu empfangen, die sich auf die Maschine (22) beziehen.

14. Vorrichtung nach Anspruch 13, wobei die Vorrichtung (28) konfiguriert ist, um die zweite voreingestellte Vielzahl von Werten, die sich auf die Maschine (22) beziehen, von über eine Internetverbindung zu empfangen.

15. Vorrichtung nach einem der Ansprüche 9 bis 14, wobei das Empfangen der zweiten Benutzereingabe das Auswählen des Abschnitts der Diagnosedaten basierend auf der ersten Benutzereingabe umfasst.

## Revendications

1. Procédé destiné à la surveillance de données diagnostiques, le procédé comprenant :
la détermination, sur la base d'une indication reçue d'une première entrée utilisateur, d'une manière dont les données diagnostiques associées à une machine (22) doivent être affichées sur un dispositif d'affichage (36) permettant de commuter entre des ensembles de données à présenter à un utilisateur ;
la détermination, sur la base d'une indication reçue d'une seconde entrée utilisateur, de la partie des données diagnostiques devant être affichée sur le dispositif d'affichage (36) ;
la transmission d'un signal de commande d'affichage à un écran de diagnostic (84), dans lequel le signal est associé à la manière dont les données diagnostiques doivent être affichées sur le dispositif d'affichage (36) et à la partie des données diagnostiques devant être affichée sur le dispositif d'affichage (36), et la présentation d'un ensemble d'options de configuration et d'écrans spécifiquement destinés à configurer des éléments de la machine (22) à partir d'un ensemble d'options prédéfini et stocké ;
**caractérisé par,** si la machine (22) présente une défaillance, le rendu simultané des niveaux de vibration, la teneur en métal de la lubrification et les valeurs de dégradation des performances thermiques dans le cadre d'une interface utilisateur graphique (42) comportant l'écran de diagnostic (84) pour la machine (22).

2. Procédé selon la revendication 1, comprenant la génération de l'interface utilisateur graphique (42) destinée à s'afficher sur le dispositif d'affichage (36), lorsque la première entrée utilisateur et la seconde entrée utilisateur sont toutes deux reçues.

3. Procédé selon la revendication 1 ou 2, comprenant l'identification de l'indication de la seconde entrée utilisateur comme correspondant à une valeur d'une pluralité prédéfinie de valeurs associées à la machine (22).

4. Procédé selon la revendication 3, comprenant la réception d'une indication d'une seconde pluralité prédéfinie de valeurs associées à la machine (22).

5. Procédé selon l'une quelconque des revendications 1 à 4, comprenant la sélection de la partie des données diagnostiques sur la base en partie de l'indication de la première entrée utilisateur.

6. Procédé selon l'une quelconque des revendications 1 à 5, comprenant la génération du signal en incluant des mesures de disparates caractéristiques de fonctionnement de la machine (22).

7. Programme informatique comprenant un moyen de code de programme informatique adapté pour effectuer le procédé selon l'une quelconque des revendications 1 à 6, lorsqu'il est exécuté par un processeur informatique.

8. Programme informatique selon la revendication 7, mis en pratique sur un support lisible par ordinateur.

9. Dispositif (28) comprenant un processeur informatique (30) configuré pour exécuter des instructions pour
recevoir des données diagnostiques associées au fonctionnement d'une machine (22) ;
recevoir une première entrée utilisateur associée à une manière dont les données diagnostiques doivent être affichées sur un dispositif d'affichage (36), permettant de commuter entre des ensembles de données à présenter à un utilisateur ;
recevoir une seconde entrée utilisateur associée à la partie des données diagnostiques devant être affichée sur le dispositif d'affichage (36) ;
transmettre un signal relatif à la manière dont les données diagnostiques doivent être affichées sur le dispositif d'affichage (36) et à la partie des données diagnostiques qui doit être affichée sur le dispositif d'affichage (36), et présenter un ensemble d'options de configuration et d'écrans spécifiquement destinés à configurer des éléments de la machine (22) à partir d'un ensemble d'options prédéfini et stocké ;
**caractérisé par,** si la machine (22) présente une défaillance, le rendu simultané des niveaux de vibration, la teneur en métal de la lubrification et les valeurs de dégradation des performances thermiques dans le cadre d'une interface utilisateur graphique (42) comportant l'écran de diagnostic (84) pour la machine (22).

10. Dispositif selon la revendication 9, dans lequel le dispositif est configuré pour recevoir la première entrée utilisateur et la seconde entrée utilisateur en tant que réponses à une interface utilisateur graphique commune affichée sur le dispositif d'affichage lorsque la première entrée utilisateur et la seconde entrée utilisateur sont toutes deux reçues par l'interface utilisateur graphique.

11. Dispositif selon la revendication 9 ou 10, dans lequel le dispositif est configuré pour recevoir les données diagnostiques en temps réel ou pour recevoir les données diagnostiques à partir du stockage en tant que données historiques.

12. Dispositif selon la revendication 9 ou 10, dans lequel la réception de la seconde entrée utilisateur comprend l'identification de la seconde entrée utilisateur comme correspondant à une valeur d'une pluralité prédéfinie de valeurs associées à la machine.

13. Dispositif selon la revendication 12, dans lequel le dispositif (28) est configuré pour recevoir une seconde pluralité prédéfinie de valeurs associées à la machine (22).

14. Dispositif selon la revendication 13, dans lequel le dispositif (28) est configuré pour recevoir la seconde pluralité prédéfinie de valeurs associées à la machine (22) par le biais d'une connexion Internet.

15. Dispositif selon l'une quelconque des revendications 9 à 14, dans lequel la réception de la seconde entrée utilisateur comprend la sélection de la partie des données diagnostiques sur la base en partie de la première entrée utilisateur.
